# FASCICULE DE BREVET EUROPEEN

(11) **EP 0 635 079 B1**
(45) Date de publication et mention de la délivrance du brevet: **07.11.2001**
(21) Numéro de dépôt: 94906939.7
(22) Date de dépôt: 10.02.1994
(51) Int. Cl.: D06N 5/00, B32B 11/02, E04D 3/35

(54) **MATERIAU RESISTANT AU FEU POUR TOITURE ET BARDAGE**
FEUERFESTES MATERIAL FÜR BEDACHUNG UND SCHUTZPLANKE
FIRE-RESISTANT ROOFING AND CLADDING MATERIAL

(30) Priorité: 11.02.1993 FR 9214888
(43) Date de publication de la demande: 25.01.1995
(73) Titulaire: Onduline, 75017 Paris (FR)
(72) Inventeur: Onduline, 75017 Paris (FR)
(74) Mandataire: Leboyer, Jean-Jacques
(86) Numéro de dépôt international: FR9400155
(87) Numéro de publication internationale: WO9418379

(56) Documents cités:
- EP-A- 0 209 712
- EP-A- 0 400 711
- DE-B- 1 078 990
- FR-A- 2 346 149
- FR-A- 2 372 927

## Description

La présente invention concerne les matériaux de toiture et de bardage; elle concerne plus particulièrement un matériau résistant au feu pour toiture et bardage, ainsi qu'un procédé pour son obtention.

On connaît des matériaux pour toiture et bardage, en plaques ondulées et légères, constituées essentiellement de fibres cellulosiques saturées de bitume ou de goudron. Du fait de leur composition, ces éléments de toiture sont, dans certains cas, inflammables.

On connaît également, d'après le document DE-A-1 078 990 des plaques de toiture ayant une durée de vie améliorée, combinant une plaque support et une couche de revêtement, cette dernière étant essentiellement composée de bitume et de poly(chlorure de vinyle), de poly(chlorure de vinylidène) ou de copolymères de ceux-ci, ainsi que de sable ou de gravillons. L'amélioration de la résistance aux intempéries et à la lumière solaire est l'objectif visé et la résistance au feu n'est pas traitée.

Le document US-A-2 893 889 décrit un matériau de couverture à base de fibres, comprenant une couche fibreuse de base et un revêtement composé pour l'essentiel d'un mélange de filaments de verre de dimensions critiques et de bitume d'imprégnation. Il est précisé que, pour la résistance au feu, les filaments de verre doivent avoir un diamètre de 0,5 à 4 micromètres et doivent représenter au plus environ 5% en poids de l'ensemble asphalte-filaments.

Le document FR-A-2 372 927 décrit un procédé de fabrication de plaques ondulées bituminées difficilement combustibles, dans lequel on coule, sur la surface du carton brut encore humide, une solution ou suspension aqueuse contenant des sels d'ammonium, un composé du bore, un composé de l'antimoine, un silicate, un composé organique du brome, ainsi que du poly(chlorure de vinyle). La plaque ainsi composée est ensuite formée, séchée et imprégnée avec du bitume chaud.

Le document EP-A-0 209 712 décrit une plaque pour sous-toiture constituée d'une nappe de fibres traitée pour être perméable à la vapeur d'eau, mais imperméable à l'eau, par adjonction sur ses deux faces d'une masse d'imprégnation comprenant du bitume et de la paraffine.

Il existait donc un besoin pour rendre résistants au feu des matériaux du type susdit.

A la suite de longues recherches, on a maintenant trouvé de manière inattendue que constitue un matériau de ce type doté d'une excellente résistance au feu et aux flammèches un matériau composite essentiellement composé d'une combinaison d'un matériau de base en cellulose bituminée avec un voile de verre imprégné et surfacé au moyen d'un bitume modifié et revêtu sur sa face externe d'au moins une matière choisie dans le groupe composé des granulés minéraux, des paillettes d'ardoise et des silicates feuilletés non expansés, tandis que le bitume et/ou le support cellulosique du matériau de base est en outre chargé avec au moins une poudre minérale ou synthétique, et que ledit matériau comporte en outre en sous-face du support cellulosique bitaminé une couche de résine thermodurcissable.

Il est en outre apparu que le matériau selon l'invention présente pour avantages supplémentaires d'être un matériau de couverture et de bardage stable, léger, esthétique et ayant une résistance au vieillissement et à l'action des rayonnements UV très largement améliorée par rapport aux toitures et bardages existants.

La présente invention a pour premier objet un matériau composite pour toiture et bardage selon la revendication 1.

Ledit voile de verre est de préférence constitué de fibres de quelques micromètres, avantageusement d'environ 2 à 4 micromètres, de diamètre et de quelques millimètres de long. Il représente avantageusement 9-12% en poids du bitume, modifié ou non, de ladite chape.

L'invention sera mieux comprise en référence à la description ci-après et aux dessins annexés, qui visent à l'illustrer plus concrètement, mais ne la limitent aucunement.

Dans la planche de dessins annexée:
Fig. 1 représente une vue en coupe transversale schématique partielle d'un matériau ondulé selon l'invention avec des ondes sinusoïdales régulières;
Fig. 2 représente une vue en coupe transversale schématique partielle d'un matériau ondulé selon l'invention avec des ondes respectivement haute et basse de rayons de courbure différents; et
Fig. 3 représente une vue en coupe transversale schématique partielle d'un matériau ondulé selon l'invention avec des ondes respectivement haute et basse de rayons de courbure différents, comme dans la figure 2, mais dans lequel est introduite longitudinalement sur les ondulations supérieures une pièce métallique en forme de cornière.

Il convient de souligner qu'un matériau composite ayant tout autre profil transversal ou même plat rentre également dans le cadre de la présente invention.

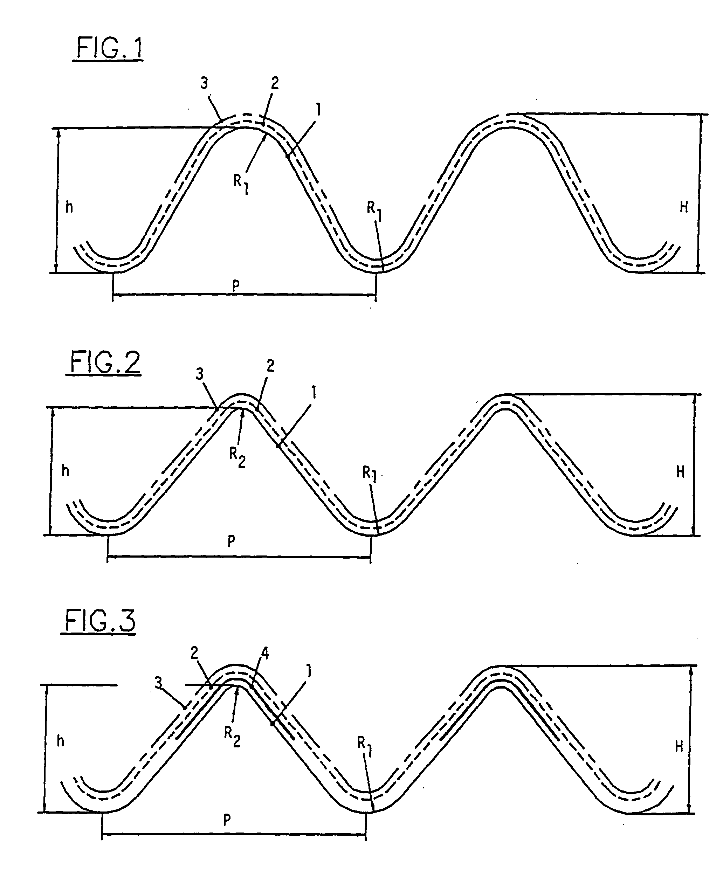

Comme l'illustre la figure 1, le matériau composite pour toiture et bardage selon l'invention comprend un matériau de base en cellulose bituminée 1, un voile de verre imprégné et surfacé au moyen d'un bitume modifié, de façon à former une chape 2, qui porte en outre sur sa face externe un revêtement d'au moins une matière 3 choisie dans le groupe composé des granulés minéraux, des paillettes d'ardoise et des silicates feuilletés non expansés. Comme indiqué plus haut, le matériau composite selon l'invention comprend en outre, à titre de charge du bitume et/ou du support cellulosique du matériau de base, une poudre minérale ou synthétique, non représentée sur les figures.

Dans la pratique, le matériau ainsi composé consiste de préférence, mais sans que cela soit limitatif, en des plaques ondulées d'environ 2 m x 1 m, avec des ondes ayant un pas P d'environ 96 mm d'un sommet au sommet contigu, pour une profondeur des ondulations d'environ 35 à 50 mm, avec une préférence pour des hauteurs h des ondulations de 35-50 mm et des largeurs hors-tout H du matériau du sommet d'une onde supérieure au sommet de l'onde creuse voisine comprises entre environ 45 et 60 mm.

Les ondes se définissent également par leur angle de courbure, qui peut être le même pour les ondulations haute et basse, par exemple R₁ = environ 16 mm, ou un rayon différent pour les ondulations hautes, comme par exemple un rayon plus petit R₂ = environ 5 mm (voir figures).

Avantageusement une onde latérale d'extrémité est réservée, c'est-à-dire non recouverte, pour faciliter son recouvrement par une onde elle-même recouverte de la plaque voisine.

La charge susdite du bitume et/ou du matériau cellulosique est constituée de poudre de poly(chlorures de vinyle) ou de poly(chlorures de vinylidène) dopés et/ou d'hydrate d'alumine, d'hydrate de magnésium, de trioxyde d'antimoine ou de paraffine chlorée.

Selon une forme de mise en oeuvre préférée, la poudre ajoutée comme charge du bitume et/ou du matériau cellulosique est une poudre synthétique fine de PVC ou de PVDC stabilisé au plomb et dopé à l'oxyde d'antimoine ou une poudre minérale d'hydrate d'alumine ou de magnésium.

L'ensemble composite ainsi constitué est apte à satisfaire au test T/30/1 défini par le CSTB (Centre Scientifique et Technique du Bâtiment, 4 avenue du Recteur Poincaré, Paris, France).

Le bitume d'imprégnation du support cellulosique est de préférence un bitume routier, mais peut également être pour tout ou partie un bitume d'une quelconque autre qualité, comme par exemple du bitume de distillation directe ou du bitume oxydé.

La couche de résine thermodurcissable en sous-face du support cellulosique bituminé, confére au dit support cellulosique une stabilité dimensionnelle améliorée, en cas de variation du degré d'humidité de ce support. A titre d'exemple non limitatif, ladite résine est de la mélamine, qui s'est avérée réduire sensiblement les conséquences sur l'allongement de la cellulose et sa résistance à la flexion de la reprise d'eau de la celllulose, même imprégnée de bitume.

Selon une autre variante, le matériau selon l'invention comprend également un élément de renforcement 4 (voir figure 3) inséré entre les parties 1 et 2. Dans une forme de réalisation de cette variante constituant le meilleur mode de mise en oeuvre de l'invention d'après les connaissances acquises à ce jour, le matériau 1 a une section transversale en forme d'ondes à développement sensiblement sinusoïdal et l'élément de renforcement susdit a la forme d'une cornière métallique coiffant chacune ou au moins plusieurs des ondes supérieures. De plus, au moins dans une telle variante, il est apparu avantageux que les ondes supérieures aient un rayon de courbure minimum ou au moins inférieur à celui des ondes inférieures.

Ledit élément de renforcement 4, notamment ladite cornière métallique, peut être réalisé en tout métal ou alliage de métaux approprié, comme par exemple en acier, en acier inoxydable, en acier galvanisé, en acier laqué, en aluminium et/ou en cuivre.

La préférence va à des éléments métalliques 4 étroits de type cornière, coiffant sensiblement dans toute leur longueur les ondes supérieures du matériau 1, qui permettent ainsi que soit évacuée à travers la partie cellulosique du matériau composite de couverture ou de bardage la vapeur d'eau susceptible de traverser ledit matériau, contribuant ainsi à maintenir un taux d'humidité acceptable, sans dommage pour le support.

Dans cette variante préférée selon l'invention, ledit élément de renforcement peut avantageusement être inséré entre les sommets des ondes du matériau de base et la chape bitumineuse souple qui recouvre celui-ci. Il suffit, pour assurer la cohésion de l'ensemble, d'un collage efficace, à la portée de l'homme du métier. Dans la pratique, ces éléments de renforcement se trouvent noyés dans le bitume de surfaçage et sont ainsi protégés contre la corrosion par le matériau 2.

La forme de mise en oeuvre la plus avantageuse décrite ci-dessus confère au matériau une tenue mécanique - résistance à la flexion - améliorée, une meilleure portance entre pannes et un meilleur aspect visuel.

Dans la pratique la solidarisation des parties 1 et 2 entre elles s'effectue par simple collage intime, à chaud.

Pour une meilleure efficacité du matériau selon l'invention le bitume d'imprégnation et de surfaçage du voile de verre (B), avec lequel il forme une chape, est de préférence choisi parmi les bitumes de distillation directe modifiés par l'adjonction d'un élastomère, notamment d'un élastomère de polypropylène atactique, de styrène butadiène ou de caoutchouc naturel. La chape répondant à cette variante avantageuse s'est avérée présenter une résistance remarquable au vieillissement, une bonne souplesse et un pouvoir collant élevé, assurant la parfaite tenue des granulés ou paillettes en surface et la liaison intime avec le support en matériau cellulosique.

La chape 2 selon l'invention peut en outre comporter, en option, d'autres charges actives aptes à dégager de la vapeur d'eau sous l'action de la chaleur produite par un foyer, telles que par exemple de l'hydrate d'alumine, empêchant ainsi la propagation des flammes.

Un autre exemple d'une telle charge active pour la chape 2 est le phosphogypse hémihydraté, de formule brute CaSO₄.1/2H₂O, qui est apte à supporter l'introduction dans le bitume chaud (à environ 180°C) sans provoquer trop de bouillonnement et bulles de surface. Ainsi introduite dans le bitume de la chape 2, cette charge active libère de l'eau et constitue ensuite une masse telle que du verre, opposant une barrière au feu.

La présence de paillettes de silicate feuilleté non expansées contribue également, par la formation d'une sorte de "meringue" en surface sous l'effet d'un feu, à la protection du subjectile.

Les composants classiques du matériau selon l'invention sont choisis parmi ceux qui sont connus de l'homme du métier pour un tel usage ou des utilisations semblables. Egalement les proportions respectives des différents composants des matériaux et charges ou autres additifs peuvent être choisies au cas par cas par l'homme du métier, en fonction des objectifs visés et sur la base d'essais de routine, si nécessaire.

L'invention a également pour objet un procédé pour la production d'un tel matériau, dans lequel:
a) on réalise un support cellulosique 1, de préférence ondulé ou profilé d'une autre manière, et on le charge avec au moins une poudre minérale ou synthétique choisie parmi les poudres de poly(chlorures de vinyle) ou de poly(chlorures de vinylidène) dopés et/ou d'hydrate d'alumine, d'hydrate de magnésium, de trioxyde d'antimoine ou de paraffine chlorée, tandis que ladite charge représente environ 5 à 20%, de préférence environ 10 à 16%, en poids/poids du support cellulosique bituminé,
(b) on imprègne à coeur le support cellulosique susdit avec du bitume routier,
(c) on applique, de préférence par collage intime à chaud, sur une face de la plaque de matériau imprégné obtenue, une charge bitumineuse 2 armée d'un voile de fibres de verre, revêtue sur la face opposée d'au moins une matière 3 choisie dans le groupe composé des granulés minéraux, de préférence colorés, des paillettes d'ardoise et des silicates feuilletés non expansés, et on applique en outre en sous-face dudit support une résine thermodurcissable.

En variante, l'invention a pour objet un tel procédé, comportant également l'insertion entre le matériau de base 1 et la chape 2 d'un élément de renforcement 4 décrit plus en détail plus haut. Cette variante est avantageuse, car elle conduit à placer sans dommage, entre les deux matériaux bitumineux étanches 1 et 2 destinés à être assemblés, des éléments de renforcement, qui peuvent être très fins et légers et qui, pris entre l'élément cellulosique et la chape également bitumineuse, sont parfaitement protégés contre toute corrosion et peuvent accroître dans des proportions considérables la résistance à la flexion du matériau composite. Ainsi, le doublement du moment quadratique d'inertie et l'augmentation de la hauteur de l'onde d'un matériau commposite ondulé, c'est-à-dire la distance par rapport à la fibre neutre, permettent d'augmenter à l'utilisation la distance entre les supports et appuis, ainsi que la charge, notamment de neige, ou la résistance à l'arrachement.

Il est même possible de prévoir un débordement des éléments de renforcement aux extrémités des plaques unitaires d'une manière appropriée pour permettre qu'ils servent également d'éléments de liaison entre deux ou plus de deux plaques.

A titre d'exemple non limitatif, on peut mettre en oeuvre une chape de fibre de verre bituminée, comportant une faible adjonction de polypropylène atactique dans le bitume d'imprégnation et recouverte sur sa surface restant visible de granulés ayant la couleur recherchée ou mieux de paillettes de vermiculite expansée. Cette chape de dimension appropriée est appliquée, tiède, dans le sens des ondes (dont une onde est laissée réservée pour son recouvrement par une plaque voisine, à l'utilisation) sur une plaque de carton bituminé que l'on a fait exsuder juste avant de la mettre en contact avec la chape susdite, préformée exactement au pas et à la profondeur des ondulations, de rayon R₁ et/ou R₂, de la plaque à recouvrir. Un calandrage très léger, sur la chape, achève la liaison entre plaque et chape. Par ailleurs, on applique sur la face inférieure de la plaque, avant ou après le processus susdit, une couche de mélamine, à raison de préférence d'environ 60 g pour une surface de plaque d'environ 2 m².

Pour la variante mettant en oeuvre des éléments métalliques 4 tels que décrits plus haut, il suffit d'intercaler ces éléments entre plaque et chape de manière appropriée, avant d'appliquer la chape sur la plaque comme indiqué ci-dessus. En pratique on utilise pour ce faire des lames métalliques légères en forme d'équerre, que l'on place à cheval sur les sommets des ondes ou angles à recouvrir de la plaque de base.

Les différences existantes entre les coefficients de dilatation thermique respectifs du matériau cellulosique et de ce matériau métallique ne constituent pas une gêne, car l'élément métallique est lié élastiquement aux bitumes, qui acceptent des dilatations différentielles. Il en est d'ailleurs de même pour la dilatation ou la rétraction de la cellulose de la plaque de base en fonction de son degré d'humidité: le bitume élastique accepte les différences d'allongement ou de retrait pouvant survenir entre cellulose sensible à l'humidité et métal insensible à l'humidité.

Les charges actives susdites, notamment sous forme de poudre fine de PVC stabilisé au plomb et dopé à l'antimoine et/ou d'hydrate d'alumine, peuvent remplacer totalement ou partiellement les charges traditionnelles, telles que du carbonate de calcium, imprégnant classiquement un matériau cellulosique bituminé pour toiture et bardage.

Bien que chacun des éléments entrant dans la combinaison décrite plus haut contribue à conférer une résistance au feu appropriée au matériau d'ensemble, aucun d'eux pris isolément ne peut être considéré comme suffisant à cette fin. Le matériau selon l'invention s'est avéré présenter à cet égard une synergie particulière, qui tient au fait que la résistance au feu implique plusieurs réponses à des contraintes variées. C'est ainsi que la non-transmission des calories créées par le foyer d'incendie est apportée par certains produits, plus que par d'autres. La création d'une ambiance défavorable à la combustion est un autre facteur positif de la résistance au feu; à cet égard, le voile de verre crée une véritable barrière. Le traitement en sous-face par une résine particulière constitue quant à lui un barrage à la propagation de la flamme sous la plaque de toiture.

Le matériau selon l'invention peut être mis en oeuvre selon des techniques connues, en toiture et en bardage, et plus généralement en toutes applications pour lesquelles ces matériaux en plaques remplissent la fonction de matériaux résistants au feu.

L'invention a donc également pour objet l'utilisation de ces matériaux pour la réalisation de toitures ou de bardages résistants au feu.

## Revendications

1. Matériau composite pour toiture et bardage, essentiellement composé d'une combinaison de:
(A) un matériau de base (1) en cellulose bituminée avec
(B) un voile de verre imprégné et surfacé au moyen
d'un bitume ou d'un bitume modifié, de façon à former une chape (2),
et portant en outre sur sa face externe au moins une matière (3) choisie dans le groupe composé des granulés minéraux, des paillettes d'ardoise et des silicates feuilletés non expansés,
**caractérisé en ce que** le bitume et/ou le support cellulosique du matériau de base est en outre chargé avec au moins une poudre minérale ou synthétique choisie parmi les poudres de poly(chlorures de vinyle) ou de poly(chlorures de vinylidène) dopés et/ou d'hydrate d'alumine, d'hydrate de magnésium, de trioxyde d'antimoine ou de paraffine chlorée, à raison d'environ 5 à 20%, de préférence environ 10 à 16%, en poids/poids du support cellulosique bituminé,
et **en ce que** ledit matériau comprend en outre en sous-face du support cellulosique bituminé (1) une couche de résine thermodurcissable.

2. Matériau selon la revendication 1, **caractérisé en ce que** la poudre ajoutée comme charge du bitume et/ou du matériau cellulosique est une poudre synthétique fine de PVC stabilisé au plomb et dopé à l'oxyde d'antimoine.

3. Matériau selon l'une des revendications 1 ou 2, **caractérisé en ce que** le bitume d'imprégnation et de surfaçage du voile de verre, avec lequel il forme une chape (2), est choisi parmi les bitumes de distillation directe modifiés par l'adjonction d'un élastomère.

4. Matériau selon la revendication 3, **caractérisé en ce que** l'élastomère est un élastomère de polypropylène atactique, de styrène butadiène ou de caoutchouc naturel.

5. Matériau selon l'une quelconque des revendications 1 à 4, **caractérisé en ce qu'**il comporte des charges actives aptes à dégager de la vapeur d'eau sous l'action de la chaleur produite par un foyer.

6. Matériau selon la revendication 5, **caractérisé en ce que** lesdites charges actives sont de l'hydrate d'alumine.

7. Matériau selon l'une quelconque des revendications 1 à 6, **caractérisé en ce qu'**il comporte en outre un élément de renforcement métallique (4) entre la plaque (1) et la chape (2).

8. Matériau selon la revendication 7, **caractérisé en ce que** le matériau (1) a une section transversale en forme d'ondes à développement sensiblement sinusoidal et l'élément de renforcement (4) est une cornière métallique coiffant au moins plusieurs des ondes supérieures dudit matériau (1).

9. Matériau selon la revendication 8, **caractérisé en ce que** les ondes supérieures du matériau (1) ont un rayon de courbure inférieur à celui des ondes inférieures.

10. Procédé pour la production d'un matériau composite pour toiture et bardage, **caractérisé en ce que**:
a) on réalise un support cellulosique (1), de préférence ondulé ou profilé d'une autre manière, et on le charge avec au moins une poudre minérale ou synthétique choisie parmi les poudres de poly(chlorures de vinyle) ou de poly(chlorures de vinylidène) dopés et/ou d'hydrate d'alumine, d'hydrate de magnésium, de trioxyde d'antimoine ou de paraffine chlorée, tandis que ladite charge représente environ 5 à 20 %, de préférence environ 10 à 16 %, en poids/poids du support cellulosique bituminé,
b) on imprègne à coeur le support cellulosique susdit avec du bitume routier,
c) on applique, de préférence par collage intime à chaud, sur une face de la plaque de matériau imprégné obtenue, une chape bitumineuse (2) armée d'un voile de fibres de verre, revêtue sur la face opposée d'au moins une matière (3) choisie dans le groupe composé des granulés minéraux, de préférence colorés, des paillettes d'ardoise et des silicates feuilletés non expansés, et on applique en outre en sous-face dudit support une résine thermodurcissable.

11. Procédé selon la revendication 10, **caractérisé en ce que** ledit bitume routier est préalablement chargé avec au moins une poudre minérale ou synthétique choisie parmi les poudres de poly(chlorures de vinyle) ou de poly(chlorures de vinylidène) dopés et/ou d'hydrate d'alumine, d'hydrate de magnésium, de trioxyde d'antimoine ou de paraffine chlorée.

12. Procédé selon la revendication 10, **caractérisé en ce qu'**on intercale en outre des éléments métalliques (4) entre la plaque (1) et la chape (2).

13. Utilisation d'un matériau selon l'une quelconque des revendications 1 à 9 pour la réalisation de toitures ou de bardages résistants au feu.

## Claims

1. A composite roofing and cladding material, essentially composed of a combination of:
(A) a bitumen-coated cellulose base material (1)
comprising
(B) a glass mat which is impregnated and surface-treated by means of
a bitumen or modified bitumen so as to form a coating (2),
and comprising in addition on its outer face at least one material (3) selected from the group comprising mineral granules, slate flakes and unexpanded layer silicates,
**characterised in that** the bitumen and/or the cellulose support of the base material is filled in addition with at least one mineral or synthetic powder selected from doped poly(vinyl chloride) or poly(vinylidene chloride) powders, and/or hydrated alumina, hydrated magnesia, antimony trioxide or chlorinated paraffin wax, in a proportion (weight/weight) of about 5 to 20 %, preferably about 10 to 16 %, of the bitumen-coated cellulose support,
and that said material additionally comprises a layer of thermosetting resin on the underside of the bitumen-coated cellulose support (1).

2. A material according to claim 1, **characterised in that** the powder which is added as a filler to the bitumen and/or to the cellulose material is a fine synthetic PVC powder which is stabilised with lead and which is doped with antimony oxide.

3. A material according to either one of claims 1 or 2, **characterised in that** the bitumen used for impregnating and surface-treating the glass mat, with which it forms a coating (2), is selected from direct distillation bitumens which are modified by the addition of an elastomer.

4. A material according to claim 3, **characterised in that** the elastomer is an elastomer of atactic polypropylene, of styrene-butadiene or of natural rubber.

5. A material according to any one of claims 1 to 4, characterised that in that it comprises active fillers which are suitable for the evolution of water vapour under the action of the heat produced by a source of heat.

6. A material according to claim 5, **characterised in that** said active fillers are hydrated alumina.

7. A material according to any one of claims 1 to 6, **characterised in that** it additionally comprises a metal reinforcing element (4) between the panel (1) and the coating (2).

8. A material according to claim 7, **characterised in that** the material (1) has a cross-section in the form of corrugations which extend substantially sinusoidally, and the reinforcing element (4) is a metal angle which covers at least a plurality of the upper corrugations of said material (1).

9. A material according to claim 8, **characterised in that** the upper corrugations of the material (1) have a radius of curvature which is less than that of the lower corrugations.

10. A process for producing a composite roofing and cladding material, **characterised in that**:
a) a cellulose support (1) is produced, which is preferably corrugated or contoured in another manner, and is filled with at least one mineral or synthetic powder selected from doped poly(vinyl chloride) or poly(vinylidene chloride) powders, and/or hydrated alumina, hydrated magnesia, antimony trioxide or chlorinated paraffin wax, whilst said filler represents about 5 to 20 %, preferably about 10 to 16 % (weight/weight), of the bitumen-coated cellulose support,
b) the aforementioned cellulose support is impregnated throughout with road bitumen,
c) a bituminous coating (2) is applied, preferably by hot, intimate adhesive bonding, to one face of the impregnated panel of material obtained, which bituminous coating is reinforced with a glass fibre mat, and is coated on its opposite face with at least one material (3) selected from the group comprising mineral granules, which are preferably coloured, slate flakes and unexpanded layer silicates, and a thermosetting resin is additionally applied to the underside of said support.

11. A process according to claim 10, **characterised in that** said road bitumen is previously filled with at least one mineral or synthetic powder selected from doped poly(vinyl chloride) or poly(vinylidene chloride) powders, and/or hydrated alumina, hydrated magnesia, antimony trioxide or chlorinated paraffin wax.

12. A process according to claim 10, **characterised in that** metal elements (4) are additionally intercalated between the panel (1) and the coating (2).

13. Use of a material according to any one of claims 1 to 9 for producing fire-resistant roofing or cladding panels.

## Patentansprüche

1. Materialzusammensetzung für einen Dachbelag und eine Fassadenverkleidung, im Wesentlichen zusammengesetzt aus einer Kombination aus:
(A) einem Basismaterial (1) aus bituminierter Cellulose mit
(B) einer Glasabdeckung, die mittels Bitumen oder modifiziertem Bitumen imprägniert und überzogen ist, derart, um eine Abdeckung (2) zu bilden,
und die außerdem auf ihrer Außenseite wenigstens ein Material (3) trägt, das aus der Gruppe, die durch Erzgranulat, Schiefersplitt und nicht expandierten Schichtsilicaten zusammengesetzt ist, ausgewählt ist,
**dadurch gekennzeichnet, dass** das Bitumen und/oder der Celluloseträger des Basismaterials außerdem mit wenigstens einem Mineral- oder Synthetikpulver, das unter den Pulvern von dotiertem Poly(vinylchlorid) oder Poly(vinylidenchlorid) und/oder Aluminiumoxidhydrat, Magnesiumhydrat, aus Antimontrioxid oder aus chloriertem Paraffin ausgewählt sind, im Verhältnis von ungefähr 5 bis 20 Gew.-%, von vorzugsweise von ungefähr 10 bis 16 Gew.-%, zum Gewicht des bituminierten Celluloseträgers,
und dadurch, dass dieses Material außerdem an der Unterseite des bituminierten Celluloseträgers (1) eine Schicht aus einem in Wärme aushärtenden Kunstharz umfasst.

2. Material nach Anspruch 1, **dadurch gekennzeichnet, dass** das als eine Charge aus Bitumen und/oder aus Cellulosematerial beigefügte Pulver ein feines synthetisches Pulver aus PVC ist, das mit Blei stabilisiert und mit Antimonoxid dotiert ist.

3. Material nach einem der Ansprüche 1 oder 2, **dadurch gekennzeichnet, dass** das Bitumen zur Imprägnierung und Oberflächenbehandlung der Glasabdeckung, mit welchem es eine Abdeckung (2) bildet, unter den Bitumen der Straight-Run-Destillation, die durch den Zusatz eines Elastomers modifiziert sind, ausgewählt ist.

4. Material nach Anspruch 3, **dadurch gekennzeichnet, dass** das Elastomer ein Elastomer aus ataktischem Polypropylen, Styrol-Butadien oder Naturkautschuk ist.

5. Material nach einem der Ansprüche 1 bis 4, **dadurch gekennzeichnet, dass** es aktive Chargen, die geeignet sind, den Wasserdampf unter dem Einfluss der durch einen Ofen erzeugten Wärme freizusetzen, enthält.

6. Material nach Anspruch 5, **dadurch gekennzeichnet, dass** die aktiven Chargen Aluminiumoxidhydrate sind.

7. Material nach einem der Ansprüche 1 bis 6, **dadurch gekennzeichnet, dass** es außerdem ein metallisches Verstärkungselement (4) zwischen der Platte (1) und der Abdeckung (2) enthält.

8. Material nach Anspruch 7, **dadurch gekennzeichnet, dass** das Material (1) einen transversalen Querschnitt in Form von Wellen mit einer im Wesentlichen sinusförmigen Entwicklung aufweist und das Verstärkungselement (4) ein metallisches Winkelprofil, das wenigstens mehrere der oberen Wellen des Materials (1) überdeckt, ist.

9. Material nach Anspruch 8, **dadurch gekennzeichnet, dass** die oberen Wellen des Materials (1) einen Biegeradius, der kleiner ist als derjenige der unteren Wellen, aufweisen.

10. Verfahren zur Herstellung einer Materialzusammensetzung für einen Dachbelag und eine Fassadenverkleidung, **dadurch gekennzeichnet, dass**:
(a) man einen vorzugsweise gewellten oder auf eine andere Weise profilierten Celluloseträger (1) verwirklicht und diesen mit wenigstens einem Mineral- oder Synthetikpulver beschickt, das unter den dotierten Pulvern von Poly(vinylchlorid) oder von Poly(vinylidenchlorid) und/oder aus Aluminiumoxidhydrat, Magnesiumhydrat, Antimontrioxid oder aus chloriertem Paraffin ausgewählt. ist, bis die Charge ungefähr 5 bis 20 Gew.-%, vorzugsweise ungefähr 10 bis 16 Gew.-%, zum Gewicht des bituminierten Celluloseträgers darstellt,
(b) man das Innere des vorgenannten Celluloseträgers mit Straßenbau-Bitumen imprägniert,
(c) man vorzugsweise durch intensive warm abbindende Verklebung auf einer Fläche der erhaltenen imprägnierten Materialplatte eine bituminierte Abdeckung (2) aufträgt, die durch eine Schicht aus Glasfasern verstärkt ist, die gegenüberliegende Oberfläche mit wenigstens einem Material (3) überzieht, das aus der Gruppe, welche durch Erzgranulat, vorzugsweise farbig oder gefärbt, Schiefersplitt und nicht expandierten Schichtsilicaten zusammengesetzt ist, ausgewählt ist, und man außerdem in einer Unterschicht dieses Trägers ein in Wärme aushärtendes Kunstharz aufträgt.

11. Verfahren nach Anspruch 10, **dadurch gekennzeichnet, dass** das Straßenbau-Bitumen vorab mit wenigstens einem Mineral- oder Synthetikpulver, das unter den Pulvern von dotiertem Poly(vinylchlorid) oder Poly(vinylidenchlorid) und/oder aus Aluminiumoxidhydrat, Magnesiumhydrat, Antimontrioxid oder aus chloriertem Paraffin ausgewählt sind.

12. Verfahren nach Anspruch 10, **dadurch gekennzeichnet, dass** man außerdem metallische Elemente (4) zwischen die Platte (1) und die Abdeckung (2) einfügt.

13. Verwendung eines Materials nach einem der Ansprüche 1 bis 9 zur Verwirklichung von feuerresistenten Dachbelägen oder Fassadenverkleidungen.
